# EUROPEAN PATENT APPLICATION

(11) **EP 2 267 958 A1**
(43) Date of publication of application: **29.12.2010**
(21) Application number: 09723219.3
(22) Date of filing: 20.03.2009
(51) Int. Cl.: H04L 12/58

(54) **METHOD FOR OBTAINING THE EVALUATION RESULTS AND SERVER FOR EVALUATING THE CONDITIONS**

(30) Priority: 21.03.2008 CN 200810102442
(71) Applicant: Huawei Technologies Co., Ltd., Longgang District, Shenzhen Guangdong 518129 (CN)
(72) Inventor: JIA, Jiangtao, Shenzhen Guangdong 518129 (CN); LI, Kepeng, Shenzhen Guangdong 518129 (CN); SUN, Qian, Shenzhen Guangdong 518129 (CN); DENG, Rong, Shenzhen Guangdong 518129 (CN)
(74) Representative: Pfenning, Meinig & Partner GbR
(86) International application number: PCT/CN2009/070931
(87) International publication number: WO 2009/115057

(57) **Abstract**

A method for acquiring an evaluation result and a condition evaluation server are disclosed. The method includes parsing a received request message, acquiring evaluation object, evaluation condition and evaluation settings; evaluating related information of the evaluation object based on the evaluation settings and the evaluation condition; and sending a notification message carrying the evaluation result. According to an embodiment of the present disclosure, by parsing the received request message, and acquiring the evaluation object, evaluation condition and evaluation settings, the group member who matches the condition is determined by means of condition evaluation and the detailed evaluation result is fed back to the client of the group member.

## Description

### FIELD OF THE INVENTION

The present disclosure relates to communication field, and more specifically, to a method for acquiring an evaluation result and a condition evaluation server.

### BACKGROUND

Group communication gains wide popularity in communication field. Depending on the characteristic of a group, the group may be categorized as a Pre-arranged group, an Ad-hoc group and a Chat group. The pre-arranged group is a predefined group of members with fixed group ID and members associated with the group ID. The Ad-hoc group is a group of members specified temporarily during a session, where group ID is not specified. The Chat group is a group constituted by all the members involved in a Chat session.

To further generalize the functionality of a dynamic group in order to be shared by other application servers, the concept of Dynamic Group Server (DGS) is introduced. The DGS is used to determine the dynamic group members who match the condition and inform the related information of the dynamic group members to an application server. The application server feeds back the member information to the client which then initiates a service request to the application server and invites corresponding members to join the session.

In a session based on dynamic group, when a group member does not match the evaluation condition, the DGS may only include the group member who matches the evaluation condition. However, the DGS may neither include the group member who does not match the evaluation condition nor the reason why the group member does not match the evaluation condition. That is, the DGS does not include the information regarding which condition is matched and which condition is not matched. As a result, the group members may not know the reason why he or she is rejected or excluded from the session.

### SUMMARY

A method for acquiring an evaluation result and a condition evaluation server are provided according to embodiments of the present disclosure. Thus, the detailed information of the evaluation result can be acquired when the group member does not match the evaluation condition.

A method for acquiring an evaluation result is provided according to an embodiment of the present disclosure. The method includes:
parsing a received request message, acquiring evaluation object, evaluation condition and evaluation settings;
evaluating related information of the evaluation object based on the evaluation settings and the evaluation condition; and
sending a notification message carrying the evaluation result.

A condition evaluation server is provided according to an embodiment of the present disclosure. The server includes:
a parsing module, configured to parse a received request message, acquire evaluation object, evaluation condition and evaluation settings;
an evaluation module, configured to evaluate related information of the evaluation object based on the evaluation settings and the evaluation condition; and
a notification module, configured to send a notification message carrying an evaluation result.

According to an embodiment of the present disclosure, by parsing the received request message, acquiring the evaluation object, evaluation condition and evaluation settings, determining the group member who matches the condition by means of condition evaluation and feeding back the detailed result of the condition evaluation to the client of the group member, the group member may know about the detailed evaluation result (or reason) when the group member is rejected or excluded from the session.

Detailed description will be made to the technical solutions of the present disclosure in conjunction with the embodiments and the accompanying drawings.

### BRIEF DESCRIPTION OF THE DRAWINGS

FIG. 1 illustrates a flowchart of a method for acquiring an evaluation result according to a first embodiment of the present disclosure;
FIG. 2 illustrates a flowchart of a method for acquiring an evaluation result according to a second embodiment of the present disclosure;
FIG. 3 illustrates a flowchart of a method for acquiring an evaluation result according to a third embodiment of the present disclosure;
FIG. 4 illustrates a flowchart of a method for acquiring an evaluation result according to a fourth embodiment of the present disclosure;
FIG. 5 illustrates a flowchart of a method for acquiring an evaluation result according to a fifth embodiment of the present disclosure;
FIG. 6 illustrates a flowchart of a method for acquiring an evaluation result according to a sixth embodiment of the present disclosure;
FIG. 7 illustrates a flowchart of a method for acquiring an evaluation result according to a seventh embodiment of the present disclosure;
FIG. 8 illustrates a flowchart of a method for acquiring an evaluation result according to an eighth embodiment of the present disclosure;
FIG. 9 illustrates a flowchart of a method for acquiring an evaluation result according to a ninth embodiment of the present disclosure; and
FIG. 10 is block diagram of a condition evaluation server according to an embodiment of the present disclosure.

### DETAILED DESCRIPTION

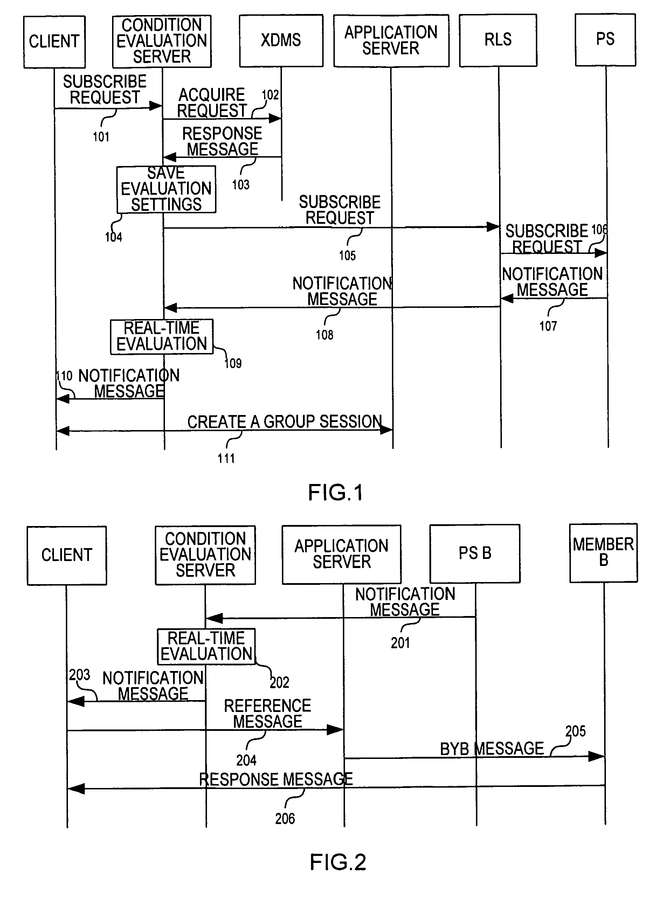

FIG. 1 illustrates a flowchart of a method for acquiring an evaluation result according to a first embodiment of the present disclosure. The embodiment includes the followings.

Step 101: The client sends a subscribe request (SUBSCRIBE) message to a condition evaluation server. The subscribe request message includes a group ID, evaluation condition, evaluation settings and an evaluation event ID.

The group ID is used to indicate a pre-arranged group, e.g., group ID. The evaluation condition is used to specify the evaluation condition which the members in the dynamic group should match. The evaluation settings is used to set the method for the condition evaluation server to perform condition evaluation. For instance, one-time evaluation, multiple times of evaluations, real-time evaluation, and information such as evaluation time, evaluation interval. The evaluation event ID is used to indicate that this message is an evaluation event which requires evaluating by the condition evaluation server. The condition for terminating the real-time evaluation is that the evaluation condition is matched or a predefined monitoring time is reached.

A subscribe request message is described below as an example. The specific message format is as follows.

```
SUBSCRIBE sip:golf-buddies @example.com SIP/2.0
    Via: SIP/2.0/TCP pda.example.com;branch=z9hG4bKnash54
    To: <sip: golf-buddies@example.com>
    From: <sip:user@example.com>;tag=xfg9
    Call-ID: 4654674982
    CSeq: 1 SUBSCRIBE
    Contact: <sip:user@pda.example.com>
    Max-Forwards: 70
    Event: condev
    Accept: application/condev-result+xml
    Content-type: application/condev-rules+xml
    Length: ...

    <?xml version="1.0" encoding="UTF-8"?>
    <condev-rules xmlns="urn:ietf:params:xml:ns:condev-rules"
    xmlns:pidf="urn:ietf:params:xml:ns:pidf"
    xmlns:rpid="urn:ietf:params:xml:ns:pidf:rpid"
    xmlns:pp=" urn:ietf:params:xml:ns:pidf:person">
    <rule id="a">
       <conditions type="xpath">
        <include>
        /pidf.presence/pidf.tuple[rpid:class="PoC"]/
 pidf:status[pidf:basic="open"]/pidf:basic
       </include>
       <include>
       /pidf:presence/pidf:person/pp:status[pp:place-type
 ="office"]/pp:place-type
        </include>
      </conditions>
   <rule>
```

```
   < evaluation-setting >
     < evaluation-type > RealTime</ evaluation-type >
   <validity>
       <from>2008-01-20T17:00:00+01:00</from>
       <until>2008-01-20T19:00:00+01:00</until>
   </validity>
   </ evaluation-setting >
   </condev-rules>
```

In the above message format, a new event packet "condev" is defined to represent a condition evaluation event. The message header of "Accept" is "application/condev-result+xml", indicating that the accepted content is the evaluation result. The message header of "Content-Type" is "application/condev-rules+xml", indicating that the content in the message body is evaluation condition "<condev-rules>" which includes "<rule>" and "<evaluation-setting>". <rule id="a"> indicates the content to be evaluated and the condition, where the content to be evaluated is "pidf:basic" and "pp:place-type", indicating that these two pieces of information need to be acquired from a presence server associated with the group member. The evaluation condition is "pidf:basic="open"" and "pp:place-type="office"", indicating that the evaluation condition is satisfied when the "pidf:basic" of the group member is "open" and the "pp:place-type" is "office".

In <rule>, the logic relation among each <include> is "and'. The <rule> comes into existence only when all the <include> conditions are satisfied. Likewise, in the <condev-rules>, a plurality of <rule> may be defined. The logic relation between each <rule> is "or'. When the condition in any of the <rule> is satisfied, it means that <condev-rules> evaluation condition matches.

The content in the <evaluation-setting> indicates that the method for setting evaluation condition, i.e., evaluation type. <evaluation-type> RealTime</ evaluation-type> indicates that the specific evaluation type is RealTime (real-time evaluation). The content in the <validity> indicates the valid time period for the evaluation method. The content in the <from> indicates the start time. The content in the <until> indicates the end time. The content in the <evaluation-type> can also be one-time evaluation, e.g., <evaluation-type >ONCE</ evaluation-type>, or, may be multiple times of evaluations, and may also include information such as time interval between each evaluation, maximum time interval and minimum time interval, etc.

The evaluation settings may also include maximum number and/or the number of Uniform Resource Identifier (URI). The condition evaluation server may return the qualified URI based on the set number of URI.

Step 102: The condition evaluation server may initiate a request for acquiring group members to an Extensible Markup Language Document Management Server (XDMS) by means of an acquire request (GET) message, based on the group ID in the subscribe request message.

Step 103: The XDMS sends a response message (OK) to the condition evaluation server. The response message may include the information of group members.

For instance, group golf-buddies@example.com may include three members: a@example.com, b@example.com and c@example.com. The response message may include the URI information of these three members.

Step 104: The condition evaluation server may save the evaluation settings.

The evaluation settings is used to specify the method for condition evaluation, i.e., one-time evaluation, real-time evaluation, multiple times of evaluation, time interval between the evaluations, evaluation granularity, etc. Evaluation granularity may refer to information such as period of the evaluation.

Real-time evaluation is described below as an example. The evaluation settings is expressed in an XML, Extensible Markup Language, format as follows.

```
    <?xml version="1.0" encoding="UTF-8"?>
    <condev-settings xmlns="urn:oma:params:xml:ns:condev-settings">
      <evaluation-type> RealTime</evaluation-type>
    <validity>
          <from>2008-01-20T17:00:00+1:00</from>
          <until>2008-01-20T19:00:00+O1:00</until>
    </validity>
     </entity>
    </ condev-settings >
```

In the above described message format, the content "RealTime" in the <evaluation-type> indicates that the specific evaluation type is real-time evaluation. The content in the <validity> indicates the valid period of the evaluation type.

Step 105: The condition evaluation server sends a subscribe request message to Resource List Servers (RLS) for subscribing to presence information associated with the group members. The subscribe request message includes group member information and the subscribed presence information. Subscribing to presence information (Presence) is described below as an example. The message format is as follows.

```
    SUBSCRIBE sip:golf-buddies @example.com SIP/2.0
    Via: SIP/2.0/TCP host.example.com;branch=z9hG4bKnash54d
    To: <sip: golf-buddies@example.com>
    From: <sip:condev@example.com>;tag=xsdfg9
    Call-ID: 4654674982
    CSeq: 12 SUBSCRIBE
    Contact: <sip:condev@host.example.com>
    Max-Forwards: 70
    Event: presence
    Content-type: multipart/mixed; boundary="boundaryl"
   Length: ...

   --boundary 1
    Content-Type: application/resource-lists+xml

   <?xml version="1.0" encoding="UTF-8"?>
    <resource-lists xmlns="urn:ietf:params:xml:ns:resource-lists"
           xmlns:xsi="http://www.w3.org/2001/XMLSchema-instance">
    <list>
     <entry uri="sip:a@example.com" />
     <entry uri="sip:b@example.com" />
     <entry uri="sip:c@example.com" />
    </list>
    </resource-lists>

    --boundary 1
    Content-Type: application /simple-filter+xml
    <?xml version="1.0" encoding="UTF-8"?>
       <filter-set xmlns="urn:ietf:params:xml:ns:simple-filter">
        <ns-bindings>
        <ns-binding prefix="pidf" urn="urn:ietf:params:xml:ns:pidf"/>
        <ns-binding prefix="rpid"
                                urn="urn:ietf:params:xml:ns:pidf:rpid"/>
        <ns-binding prefic="pp" urn=" urn:ietf:params:xml:ns:pidf:person"/>
       </ns-bindings>
       <filter id="123" uri="sip:presentity@example.com">
          <what>
            <include>
              /pidf:presence/pidf:tuple[rpid:class="PoC"]/
 pidf:status/pidf:basic
            </include>
            <include>
              /pidf:presence/pidf:person/pp:status/pp:place-type
            </include>
          </what>
        </filter>
      </filter-set>
    --boundary1--
```

In the format of the message body of the above subscribe request message, Content-Type:application/resource -lists+xml indicates the defined objects, namely, a@example.com, b@example.com and c@example.com. Content-Type:application/simple-filter+xml indicates the content which is subscribed to based on the evaluation condition. The "simple-filter" is used to filter the subscribed content. Here, based on the evaluation condition, the status information of the member: /pidf:presence/pidf:tuple[rpid:class="PoC"] /pidf:status/pidf:basic and /pidf:presence/pidf:person/pp:status/pp:place- type are subscribed to.

Sometimes, the presence server may need to authenticate the subscribe request message. The presence information of the member may be allowed to be subscribed to on the condition that the request is authorized. The subscribe request may carry the authentication information of the group members and then be sent to the presence server (PS) for subscribing to the presence information of the member. The subscribe message sent by the condition evaluation server to the PS may include a message header "P-Asserted-Identity" carrying requested information.

When the condition evaluation server is acquiring the presence information of the group members, the condition evaluation server may also be configured to subscribe to the presence information of the members for each member.

Step 106: The RLS receives a group subscribe request message from the condition evaluation server. Based on the group member information and the subscribed presence information of the members in the request message, the RLS may send the subscribe request to the PS corresponding to the group members via the subscribe request message so as to subscribe to the presence information of the group members.

Step 107: The RLS receives response information in response to notification (Notify) message from each PS.

Step 108: The RLS collects the received the subscribed group member information and sends the notification message to the condition evaluation server. The notification message includes the group member information and the related presence information.

If the status information <basic> of the members a@example.com, b@example.com and c@example.com in the returned information is "open", the status information <place-type> will all be "office".

Step 109: The condition evaluation server may evaluate the group members based on the evaluation settings and evaluation condition so as to determine the group members who match the evaluation condition and save the result of condition evaluation.

The group members match the evaluation condition only when the status information <basic> of the group member is "open", and the status information <place-type> is "office". After the real-time evaluation performed by the condition evaluation server, members a@example.com, b@example.com and c@example.com all match the evaluation condition.

Step 110: The condition evaluation server informs the client of the dynamic group information by means of the notification message. The message includes the information of the group member who matches the evaluation condition, the information of the member who does not match the evaluation condition and the information of the results of condition evaluation, or combination thereof. The specific format of the notification message is as follows:

```
   NOTIFY sip:user@example.com SIP/2.0
      Via: SIP/2.0/TCP condev.example.com;branch=z9hG4bKnash54
      Max-Forwards: 70
      From: <sip:condev.example.com>;tag=JenZ40P3
      To: <sip: user@example.com >;tag=a12eztNf
      Call-ID: 45665231jhkj
      CSeq: 452 NOTIFY
      Contact: < sip:condev@example.com>
      Content-Type: application/condev-result+xml
      Content-Length: ...
      <?xml version="1.0" encoding="UTF-8"?>
      <condev-result xmlns="urn:ietf:params:xml:ns:condev-result">
    <match-list>
               <entry uri="sip:a@example.com" />
    <entry uri="sip:b@example.com" />
         </match-list>
         < mismatch-list >
    <entry uri="sip:c@example.com" >
                 <failure-info>
                     Place type doesn't match !
                  </failure-info>
         </entry>
      <mismatch-list/>
      </condev-info>
```

In the above message format, Content-Type: application/condev-result+xml indicates the evaluation result, including the information of the group member who matches the evaluation condition, the information of the member who does not match the evaluation condition and the reason why the evaluation condition is not matched. The content in the <match-list> includes the information of the group member who matches the evaluation condition. The content in the <mismatch-list> includes the information of the group member who does not match the evaluation condition and the condition match result. In the above example, the group members a@example.com and b@example.com match the evaluation condition. The content in the <entry uri="sip:c@example.com"> indicates that c@example.com is the member in the group who does not match the evaluation condition. The content in the <failure-info> indicates the reason of the mismatch of the evaluation condition, that is, the "place" information is not matched. Here, the specific information of the match result may also be provided, e.g., matched item, mismatched item. For instance, it is because <place-type> is "home" that results in the mismatch.

Step 101~step 110 illustrate a process for the terminal acquiring the information of the dynamic group members. In the process of the client acquiring the information of the dynamic group members from the condition evaluation server, in addition to the subscribe request message and the notification message used in the above process, the client may also send an acquire request message via XCAP protocol to inform the condition evaluation server In the acquire request message, information such as evaluation object (group ID), evaluation condition and evaluation settings may be included. The condition evaluation server may acquire and then evaluate the information of evaluation object. By carrying the information such as group member information, the evaluation result in the response message, the client is able to acquire dynamic group member information from the condition evaluation server.

Step 111: The client may interact with the application server based on the received information of dynamic group members who match the condition so as to invite corresponding dynamic group members and create a group session.

The received reason of mismatch of the evaluation condition is presented to the client. The member may modify, according to the reason, some of the options which can be set by the user to satisfy the evaluation condition so as to re-initiate a request for re-evaluation to join the session.

The application server may be a Push-to-talk over Cellular (PoC) server, an Instant Message server, a Converged IP Messaging (CPM) server, etc.

In the embodiment, the client may first acquire the group members who match the evaluation condition from the condition evaluation server. By condition evaluation, the condition evaluation server may determine the group members who match the evaluation condition based on the evaluation condition of the client and feed back the group member information and the condition evaluation result to the client. The client may interact with the application server and establish a session with the group members who match the condition.

FIG. 2 illustrates a flowchart of a method for acquiring an evaluation result according to a second embodiment of the present disclosure. Compared with the previous embodiment, the present embodiment may further include the following steps after step 111.

Step 201: When the presence information of the group members on a certain PS changes, the PS may send a notification message to the RLS. The RLS may forward the notification message to the condition evaluation server so as to inform the condition evaluation server of the change of the presence information of the group member.

If the presence information of the group member B in the PS (B) changes, e.g., the status information <place-type> of the member b@example.com changes from "office" in the first embodiment to "home".

Step 202: The condition evaluation server may perform a real-time evaluation on related information of the group members based on the evaluation settings and evaluation condition. When the condition evaluation server determines that the member B does not match the evaluation condition, it may save the information of the group member who does not match the evaluation condition and the result of the condition evaluation.

The condition evaluation server may perform real-time evaluation to check if the group members match the evaluation condition. When the status information <place-type> of the group member B is detected as "home", the condition evaluation server may determine based on the evaluation settings and the evaluation condition that the member b@example.com does not match the evaluation condition.

Step 203: The condition evaluation server may send a notification message to inform the client of the change of the group member. The notification message includes the information of the group members who does not match the evaluation condition and the result of condition evaluation. A scenario where the group member B does not match the evaluation condition is described below as an example. The specific message format is as follows.

```
    NOTIFY sip:user@example.com SIP/2.0
    Via: SIP/2.0/TCP condev.example.com;branch=z9hG4bKnash54
    Max-Forwards: 70
    From: <sip:condev.example.com>;tag=JenZ40P3
    To: <sip: user@example.com >;tag=a12eztNf
    Call-ID: 45665231jhkj
    CSeq: 455 NOTIFY
    Contact: < sip:condev@example.com>
    Content-Type: application/condev-result+xml
    Content-Length: ...
    <?xml version="1.0" encoding="UTF-8"?>
    <condev-result xmlns="urn:ietf:params:xml:ns:condev-result">
      < mismatch-list >
    <entry uri="sip:b@example.com" >
                 <failure-info>
                     Place type doesn't match !
                 </failure-info>
         </entry>
      <mismatch-list/>
    </condev-info>
```

In the above message body, the <mismatch-list> includes the group member who does not match the evaluation condition and the result of the condition matching. The content in the <entry uri="sip:b@example.com"> indicates that b@example.com is the member in the group who does not match the evaluation condition. The content in the <failure-info> indicates the reason of the mismatch of the evaluation condition, that is, the "place" information is not matched. Here, the specific information of the match result may also be given, e.g., matched item, mismatched item. For instance, it is because <place-type> is "home" that results in the mismatch.

Step 204: After the client is informed that there is a member in the group who does not match the evaluation condition, the client may send a reference (REFER) message to inform the server to terminate the session with the group member who does not match the evaluation condition. The group member to leave the session is indicated in the message header "refer-to" of the REFER message by means of "BYE" and the reason why the group member is rejected from the session is included. The details of the condition matching may also be included herein. The following is an example where the client requires terminating the session with the member sip:b@example.com. The message body carrying the result of the condition evaluation in the XML format is illustrated below.

```
    <?xml version="1.0" encoding="UTF-8"?>
    <reason-info xmlns="urn:ietf:params:xml:ns:reason-info">
         <failure-info>
               Place type doesn't match !
         </ failure-info >
    </reason-info>
```

Step 205: The application server sends a BYE message to the group member B. The BYE message carries the reject reason. The specific message format is as follows:

```
    BYE sip:b@example.com SIP/2.0
    Max-Forwards: 69
    From: <sip:SessionA@example.com>;tag=1234567
    To: <sip:b@ example.com>;tag=314159
    Call-ID: 45645665sdf
    CSeq: 2 BYE
    Content-Type:application/reason-info+xml
    Content-Length: ...
    <?xml version="1.0" encoding="UTF-8"?>
    <reason-info xmlns="urn:ietf:params:xml:ns:reason-info ">
      <failure-info>
           Place type doesn't match !
      </ failure-info >
   </reason-info>
```

The reason herein may also include details of the evaluation result, including the match information and the mismatch information.

Step 206: The group member B who quits the session may send a response message to the client via the application server so as to terminate the session between the client and the group member B.

Similarly, in the group session, when the condition evaluation server detects, through real-time evaluation, a group member who matches the evaluation condition, the condition evaluation server may inform the client of the information of the group member who matches the evaluation condition. The client may then inform the application server to invite the group member to join the session. Similarly, REFER message may be employed. The INVITE method may be used in the message header "refer-to". The URI information of the group member to be invited may be indicated in the message.

In the present embodiment, the condition evaluation server receives the change notification from the group member in a certain PS, the condition evaluation server may perform real-time evaluation on the evaluation object and feed back the change information of the evaluated group member and the result of the condition evaluation to the client associated with the group member. The client may instruct the application server to terminate the session which the group member joins.

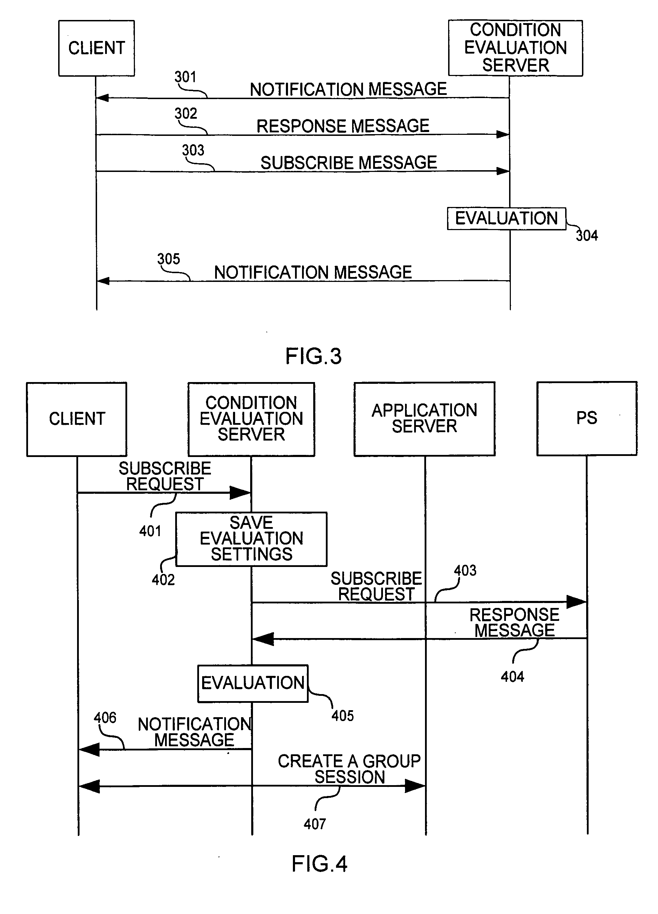

FIG. 3 illustrates a flowchart of a method for acquiring an evaluation result according to a third embodiment of the present disclosure. The process as to how the group member who does not match the evaluation condition acquires the reason of session failure is introduced. Compared with the method for acquiring the evaluation result in the first embodiment, the present embodiment may further include the following steps prior to the setup of the session or during the session.

Step 301: When the condition evaluation server detects that a group member does not match the evaluation condition, the condition evaluation server may inform the client corresponding to the group member that the group member does not match the evaluation condition. The notification message may include the evaluation condition. A scenario where it is detected that the group member A (a@example.com) does not match the evaluation condition is described below and the SIP based notification message is described as an example. The message format is as follows.

```
    MESSAGE sip:a@example.com SIP/2.0
    Via: SIP/2.0/TCP client.biloxi.example.com;branch=z9hG4bKnash
    Max-Forwards: 70
    From: <sip:condev.example.com>;tag=8675309
    To: <sip:a@example.com>
    Call-ID: sdjfikusadhf8923
    CSeq: 42 MESSAGE
    Content-type: application/condev-rules+xml
    Length: ...

    <?xml version="1.0" encoding="UTF-8"?>
    <condev-rules xmlns="urn:ietf:params:xml:ns:condev-rules"
    xmlns:pidf="urn:ietf:params:xml:ns:pidf"
    xmlns:rpid="urn:ietf:params:xml:ns:pidf:rpid"
    xmlns:pp=" urn:ietf:params:xml:ns:pidf:person">
    <rule id="a">
        <conditions type="xpath">
         <include>
    <ifexist>/pidf:presence/pidf:person/rpid:activities/rpid:meeting</ifexist>
    <iftrue>/pidf:presence/pidfauple/pidfatatus/pidf:basic="open"</iftrue>
         </include>
         <exclude>
 <ifexist>/pidf:presence/pidf:person/rpid:activities/rpid:away</ifexist>
         </exclude>
        </conditions>
        <rule>
    </condev-rules>
```

The evaluation condition in the message body is expressed in another way. The <conditions> may include <include> and <exclude>. The conditions in the <include> indicate the conditions to be included. The conditions in the <exclude> indicate the conditions to be excluded. <ifexist> indicates the presence condition. /pidf:presence/pidf: person/rpid:activities/rpid:meeting indicates that when the "activiities" is "meeting", the condition is satisfied. <iftrue> indicates the condition matched. /pidf:presence/pidfauple/pidf:status/pidf:basic ="open" indicates that the condition to be satisfied is that the status information "basic" is "open".

Step 302: The client corresponding to the group user A returns a response message to the condition evaluation server.

Step 303: The client corresponding to the group user A sends a subscribe request message to the condition evaluation server. The request message may contain the content to be evaluated in the evaluation condition. The message format is as follows.

```
    SUBSCRIBE sip:a @example.com SIP/2.0
    Via: SIP/2.0/TCP pda.example.com;branch=z9hG4bKnash54
    To: <sip: condev.example.com>
    From: <sip:a@example.com>;tag=xfg9
    Call-ID: 4654674982
    CSeq: 1 SUBSCRIBE
    Contact: <sip:a@pda.example.com>
    Max-Forwards: 70
    Event: condev
    Accept: application/condev-result+xml
    Content-type: application/condev-rules+xml
    Length: ...
    <?xml version="1.0" encoding="UTF-8"?>
       <condev-rules xmlns="urn:ietf:params:xml:ns:condev-rules"
    xmlns:pidf="urn:ietf:params:xml:ns:pidf"
    xmlns:rpid="urn:ietf:params:xml:ns:pidf:rpid"
    xmlns:pp=" urn:ietf:params:xml:ns:pidf:person">
    <rule id="a">
      <conditions type="xpath">
           <include>
               /pidf:presence/pid:tuple/pidf:status/pidf:basic
           </include>
           <include> /pidf:presence/pidf:person/rpid:activities
           </include>
      </conditions>
     <rule>
    </condev-rules>
```

In the above message body, Content-type: application/condev-rules+xml indicates that the content in the message body is the evaluation condition. /pidf:presence/pidfauple/pidf:status/pidf:basic comes from the condition indicated in the <ifexist>. /pidf:presence/pidf:person/rpid:activities comes from the condition indicated in the <ifexist>.

Step 304: The condition evaluation server may acquire the corresponding information from the PS based on the content to be evaluated in the evaluation condition and perform condition evaluation. Below is an example where the "pidf:basic" information acquired from the PS is "open" and the "rpid:activities" information is "working".

Step 305: The condition evaluation server may inform the client of the evaluation result by means of a notification message. The notification message may include the details of the evaluation result. The specific message format is as follows:

```
    NOTIFY sip:a@example.com SIP/2.0
    Via: SIP/2.0/TCP condev.example.com;branch=z9hG4bKnash54
    Max-Forwards: 70
    To: <sip: condev.example.com>;tag=erjlks
    From: <sip:a@example.com>;tag=xfg9
    Call-ID: 4566523ljhkj
    CSeq: 455 NOTIFY
    Contact: < sip:condev@example.com>
    Content-Type: application/condev-result+xml
    Content-Length: ...
    <?xml version="1.0" encoding="UTF-8"?>
    <condev-result xmlns="urn:ietf:params:xml:ns:condev-result ">
      < mismatch-list >
        <entry uri="sip:b@example.com" >
         <success-info>
           <rule attr = "basic">TRUE</rule>
         </success-info>
    <failure-info>
             <rule attr =" activities">FALSE</rule>
```

</failure-info> </entry> <mismatch-list/> </condev-info>

The evaluation result in the notification message includes a detailed evaluation result. The <success-info> indicates that the "basic" matches the evaluation condition. The <failure-info> indicates that the "activities" does not match the evaluation condition. So far, the client may be presented with the evaluation result.

In the present embodiment, the evaluation result is acquired by the client from the condition evaluation server, or may be processed at the client. The step may be as follows. The client directly subscribes to corresponding status information from the PS based on the evaluation condition. The client then compares the acquired status information with the evaluation condition and the comparison result is presented at the client.

In the embodiment of the present disclosure, since the evaluation condition changes or the presence information of the group member changes, the condition evaluation server may detect the change of the group member when performing real-time evaluation. The condition evaluation server may then determine the group member who does not match the evaluation condition and inform the client corresponding to the group member of the evaluation condition so that the client may check if its status matches with the evaluation condition. In the present embodiment, there is no need to worry about the privacy issue. The status information of the group member or the evaluation result will not be sent to the other party who joins the session, i.e., the other group member. The group member is well informed why he or she is not able to join the session or why he or she is rejected automatically from the session.

FIG. 4 illustrates a flowchart of a method for acquiring an evaluation result according to a fourth embodiment of the present disclosure. The present embodiment may include the following steps.

Step 401: The client sends a subscribe request message to the condition evaluation server. The subscribe request message includes a group member list, evaluation condition, evaluation settings and an evaluation event ID.

The group member list is used to indicate the evaluation objects. The evaluation condition is used to specify the evaluation condition which the members in the dynamic group should meet. The evaluation settings is used to set the method for the condition evaluation server to perform condition evaluation. For instance, one-time evaluation, multiple times of evaluation, real-time evaluation, and information such as evaluation time, evaluation interval. The evaluation event ID is used to indicate that this message is an evaluation event which requires evaluating by the condition evaluation server. The specific message format is essentially similar to the message format as described in the method for acquiring the evaluation result in the first embodiment, the second embodiment and the third embodiment. The main difference is that the Ad-hoc group list information is added in the message body, as shown below.

```
    Content-Type: application/resource-lists+xml
    <?xml version=" 1.0" encoding="UTF-8"?>
    <resource-lists xmlns="urn:ietf:params:xml:ns:resource-lists"
                  xmlns:xsi="http://www.w3.org/2001/XMLSchema-instance">
      <list>
        <entry uri="sip:a@example.com" />
        <entry uri="sip:b@example.com" />
        <entry uri="sip:c@example.com" />
      </list>
    </resource-lists>
```

In the above message body, the content contained in the Content-type: application/resource-lists+xml is used to indicate the Ad-hoc group member information which includes members a@example.com, b@example.com and c@example.com.

Step 402: The condition evaluation server may save the evaluation settings.

The evaluation settings is used to specify the type of condition evaluation, i.e., one-time evaluation, real-time evaluation, multiple times of evaluation, time interval between the evaluations, granularity of the evaluation, etc.

Step 403: The condition evaluation server sends a subscribe request message to the PS for subscribing to the presence information associated with the group member list. The condition evaluation server subscribes the presence information from the corresponding PS for the group member. The subscribe request message includes group member information and the subscribed presence information.

Step 404: The PS sends a notification message to the condition evaluation server. The condition evaluation server receives multiple notification messages and collects the received subscribed presence information of the group members.

Step 405: The condition evaluation server may evaluate the group members based on the evaluation settings and evaluation condition so as to determine the group members who match the evaluation condition and save the result of condition evaluation.

Step 406: The condition evaluation server sends the notification message to inform the client of the dynamic group information The message includes the information of the group member who matches the evaluation condition, the information of the member who does not match the evaluation condition and the information of the results of the condition evaluation, or combination thereof.

Step 407: The client may interact with the application server based on the received information of dynamic group members so as to invite corresponding dynamic group member who matches the evaluation condition and create a group session.

The received reason of mismatch of the evaluation condition is presented to the client. The member may modify, based on the reason, some of the options which can be set by the user to match the evaluation condition so as to re-initiate a request to join the session for re-evaluation.

In the embodiment, according to the process of the client acquiring the group member who matches the evaluation condition from the condition evaluation server, since the client specifies Ad-hoc group member information in the request message, the condition evaluation server does not need to interact with the XDMS server and may directly extract a group member list from the request. The condition evaluation server may directly acquire associated information from the PS based on the information of the member in the group member list and evaluate the Ad-hoc group member based on the evaluation settings and the evaluation condition and feed back the result to the client.

In the embodiment, the client may first select an Ad-hoc group member and then acquire from the condition evaluation server the group member who matches the evaluation condition. When acquiring the presence information of the Ad-hoc group member, the condition evaluation server may directly acquire the information from the associated PS and may determine the group member who matches the evaluation condition by performing condition evaluation and feed the group member information and the condition evaluation result back to the client. The client may interact with the application server and establish a session with the qualified group members.

Further, after step 407, the present embodiment may further include a process of rejecting the group member who does not match the evaluation condition from the session. This process is identical with the process in the second embodiment, which is omitted herein for brevity.

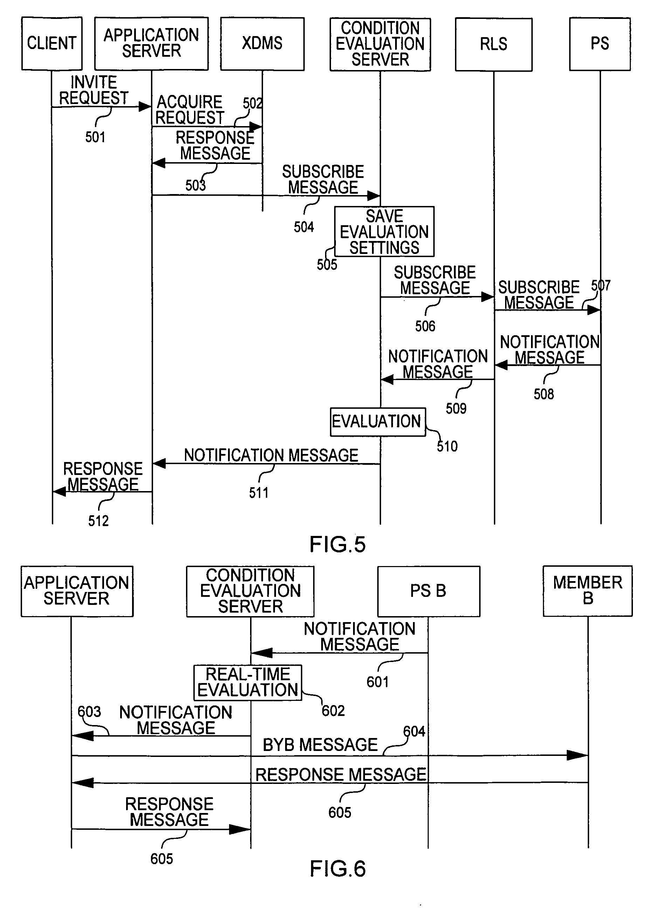

FIG. 5 illustrates a flowchart of a method for acquiring an evaluation result according to a fifth embodiment of the present disclosure. The present embodiment may include the following steps.

Step 501: The client sends an invitation request (INVITE) message to the application server, for requesting to establish a group session. The INVITE message includes a group ID, evaluation condition, evaluation settings and an evaluation service ID.

The group ID is used to indicate a pre-arranged group, e.g., group URI. The evaluation condition is used to specify the evaluation condition which the members in the dynamic group should meet. The evaluation settings is used to set the method for the condition evaluation server to perform condition evaluation. For instance, one-time evaluation, multiple times of evaluation, real-time evaluation, and information such as evaluation time, evaluation interval. The evaluation service ID is used to indicate that this service is an evaluation service which requires evaluating by the condition evaluation server. The specific message format is as follows.

```
    INVITE sip:golf-buddies @example.com SIP/2.0
    Via: SIP/2.0/TCP pda.example.com;branch=z9hG4bKnash54
    To: <sip: golf-buddies@example.com>
    From: <sip:user@example.com>;tag=xfg9
    Call-ID: 4654674982
    CSeq: 1 INVITE
    Contact: <sip:user@pda.example.com>
    Max-Forwards: 70
    Require: condition-evaluation
    Content-type: multipart/mixed; boundary="boundaryl"
    Length: ...
    --boundary 1
    Content-Type: application/sdp
    [not shown here]
    --boundary1
    Content-Type: application/condev-rules+xml
    Content-Disposition:condition-evaluation
    <?xml version=" 1.0" encoding="UTF-8"?>
    <condev-rules xmlns="urn:ietf:params:xml:ns:condev-rules"
    xmlns:pid"urn:ietf:params:xml:ns:pidf"
    xmlns:rpid="urn:ietf:params:xml:ns:pidf:rpid"
    xmlns:pp=" urn:ietf:params:xml:ns:pidf:person">
    <rule id="a">
         <conditions type="xpath">
          <include>
    <if>/pidf:presence/pidf:person/pp:status/pp:place-type/rpid:office</if>
          <if>/pidf:presence/pid:tuple/pidf:status/pidf:basic/
 pidf:open</if>
          </include>
         </conditions>
    <rule>
    < evaluation-setting >
     < evaluation-type > RealTime</ evaluation-type >
    <validity>
    <from>2008-01-20T17:00:00+01:00</from>
    <until>2008-01-20T19:00:00+01:00</until>
 </validity>
 </ evaluation-setting >
 </condev-rules>
 --boundary 1--
```

In the above request message, a Require message header parameter "condition-evaluation" is defined, which means that the application server is required to forward the related condition and the evaluation settings to the condition evaluation server for evaluation.

The above message body expresses the condition in another way. <include> contains <if> element. The condition is met only when the content in the <if> is satisfied. As in <if>/pidf:presence/pidf:person /ppatatus/pp:place-type/rpid:office</if>, the condition is matched when the value of "place-type" is "office". The way of expressing the condition is not limited to the expression in the embodiments.

Step 502: The application server sends an acquire request message to initiate a request for acquiring group members to the XDMS based on the group ID in the INVITE message.

Step 503: The XDMS sends a response message to the application server. The response message may include group member information or condition information for the group member information and the pre-arranged group, such as the size of the group, the service allowed to be initiated.

For instance, group golf-buddies@example.com may include three members: a@example.com, b@example.com and c@example.com. The response message may include the URI information of these three members.

Step 504: The application server sends a subscribe request message to the condition evaluation server based on the evaluation service ID. The request message includes group member information, evaluation condition, and evaluation settings, etc.

The application server interacts with the condition evaluation server. In addition to the subscribe request message and the notification message employed in the above process, the application server may also send an acquire request message via XCAP protocol to inform the condition evaluation server. In the acquire request message, information such as evaluation object, evaluation condition and evaluation settings may be included. The condition evaluation server may acquire and evaluate related information of the evaluation object. By carrying the information such as group member information, evaluation result in the response message, the client is able to acquire dynamic group member information from the condition evaluation server.

Step 505: The condition evaluation server may save the evaluation settings.

The evaluation settings is used to specify the type of condition evaluation, i.e., one-time evaluation, real-time evaluation, multiple times of evaluation, time interval between the evaluations, evaluation granularity, etc.

Step 506: The condition evaluation server sends a subscribe request message to the RLS for subscribing to presence information associated with the group members. The subscribe request message includes group member information and the subscribed presence information.

Alternatively, when the condition evaluation server is acquiring the presence information of the group members, the condition evaluation server may also be configured to subscribe to the present information of each member.

Step 507: The RLS receives the group subscribe request message from the condition evaluation server. Based on the group member information and the subscribed presence information of the members in the request message, the RLS may send the subscribe request to the PS corresponding to the group members by means of the subscribe request message so as to subscribe to the presence information of the group members.

Step 508: The RLS receives a notification message from each PS.

Step 509: The RLS collects the received the subscribed group member information and sends the notification message to the condition evaluation server. The notification message includes the group member information and the related presence information.

If the status information <basic> of the members a@example.com, b@example.com and c@example.com in the returned information is "open", the status information <place-type> will all be "office".

Step 510: The condition evaluation server may evaluate the presence information of the group members based on the evaluation settings and evaluation condition so as to determine the group member who matches the evaluation condition and save the result of condition evaluation.

The evaluation condition is met only when the status information <basic> of the group member is "open", and the status information <place-type> is "office". After the real-time evaluation of the condition evaluation server, members a@example.com, b@example.com and c@example.com all meet the evaluation condition.

Step 511: The condition evaluation server sends a notification message to the application server. The notification message includes the information of the group member who matches the evaluation condition, and the information of the results of the condition evaluation. The specific format of the notification message is as follows:

```
    <?xml version="1.0" encoding="UTF-8"?>
    <condev-result xmlns="urn:ietf:params:xml:ns:condev-result">
    <match-list>
              <entry uri="sip:a@example.com" />
              <entry uri="sip:c@example.com" />
    <entry uri="sip:b@example.com" />
        </match-list>
        <mismatch-list/>
    </condev-info>
```

Step 512: The application server may send an invitation to the group member matching the condition, whose information is returned by the condition evaluation server, and then establish a group session and return a response message to the client.

The received reason of mismatch of the evaluation condition is presented to the client. The member may modify, based on the reason, some of the options which can be set by the user to satisfy the evaluation condition so as to re-initiate a request to join the session for re-evaluation.

Normally, whether the group member can join the session depends on the result of condition evaluation performed by the condition evaluation server. The application server may actively invite the group member to join the dynamic group session based on the result of condition evaluation performed by the condition evaluation server. When the group member refuses the invitation, the application server will not repeatedly invite this group member to join the session. If the user wants to join the session, the user has to actively make a request to the application server. The application server may decide whether or not to allow the user to join the session based on the evaluation result.

In the present embodiment, the client may first interact with the application server and initiate a group based session request message. In the request message, the evaluation condition which the session participant needs to meet is specified and the method for executing evaluation condition is specified. The application server sends the evaluation object and the evaluation condition together with the evaluation settings to the condition evaluation server. The condition evaluation server determines the members who match the condition based on the evaluation condition of the client by performing condition evaluation. The condition evaluation server may feed back the group member information and the result of condition evaluation to the application server. The application server may then initiate an invitation for joining the session to the group members who match the condition and establish a group session.

FIG. 6 illustrates a flowchart of a method for acquiring an evaluation result according to a sixth embodiment of the present disclosure. Compared with the previous embodiment, the present embodiment may further include the following steps after step 512.

Step 601: When the presence information of the group member in a certain PS changes, the PS may inform the RLS by means of a notification message. The RLS may forward the notification message to the condition evaluation server so as to inform the condition evaluation server of the change of the presence information of the group member.

If the presence information of the group member B in the PS (B) changes, the status information <place-type> of the member b@example.com changes from "office" to "home".

Step 602: The condition evaluation server may perform a real-time evaluation on related information of the group members based on the evaluation settings and evaluation condition of the member. When it is detected that the member does not match the evaluation condition, the information of the group member who does not match the evaluation condition and the result of the condition evaluation will be saved.

The condition evaluation server may perform real-time evaluation to check if the group members match the evaluation condition. When it is detected that the status information <place-type> of the group member B is "home", the condition evaluation server may determine based on the evaluation settings and the evaluation condition that the member b@example.com does not match the evaluation condition.

Step 603: The condition evaluation server may send a notification message to inform the application server of the change of the group member. The notification message includes the information of the group members who does not match the evaluation condition and the result of condition evaluation (matched and mismatched content). A scenario where the group member B does not match the evaluation condition is described below as an example. The specific message format is as follows.

```
   NOTIFY sip:server@example.com SIP/2.0
   Via: SIP/2.0/TCP condev.example.com;branch=z9hG4bKnash54
   Max-Forwards: 70
   From: <sip:condev.example.com>;tag=JenZ40P35
   To: <sip: server@example.com >;tag=a12eztNf1
    Call-ID: 45665231jhkj
    CSeq: 455 NOTIFY
    Contact: < sip:condev@example.com>
    Content-Type: application/condev-result+xml
    Content-Length: ...
    <?xml version="1.0" encoding="UTF-8"?>
    <condev-result xmlns="urn:ietf:params:xml:ns:condev-result ">
      < mismatch-list >
    <entry uri="sip:b@example.com" >
                <failure-info>
                   Place type doesn't match !
                </failure-info>
          </entry>
      <mismatch-list/>
    </condev-info>
```

In addition to the usage of the notification message to inform the application server of the change of the member, a reference message may also be used to inform the application server to terminate the session with the member who does not match the condition. The group member to leave and the result of condition evaluation (reason why the group member is rejected) are indicated in the message header "refer-to" of the reference message by means of "BYE".

After the application server receives the change of the member, the application server may probably inform the client of the change information of the dynamic member. For instance, the application server may send an INFO message to inform the client of the information of the member who does not match the condition and the result of condition evaluation.

Step 604: The application server sends a BYE message to the group member B. The BYE message carries the quit reason. The following is an example where the member B quits the session. The specific message format is as follows.

```
    BYE sip:b@example.com SIP/2.0
    Max-Forwards: 69
    From: <sip:SessionA@example.com>;tag=1234567
    To: <sip:b@ example.com>;tag=314159
    Call-ID: 45645665sdf
    CSeq: 2 BYE
    Content-Type:application/reason-info+xml
    Content-Length: ...
    <?xml version="1.0" encoding="UTF-8"?>
    <reason-info xmlns="urn:ietf:params:xml:ns:reason-info ">
      <failure-info>
           Place type doesn't match !
      </ failure-info >
    </reason-info>
```

The reason herein may also include details of the evaluation result, including the match information and the mismatch information.

Step 605: The group member B who quits the session sends a corresponding response message via the application server to the condition evaluation server.

In the group session process, when the evaluation condition changes or the presence information of the group member changes, the condition evaluation server may detect the change when performing real-time evaluation. As a result, the group member may be rejected from the session. The group member may meet the evaluation condition by actively modifying the presence information so that the group member may re-enter the session.

In the present embodiment, the condition evaluation server receives the change notification from the group member in a PS, and may perform real-time evaluation on the evaluation object and feed back the change information of the evaluated group member and the result of the condition evaluation to the application server. The application server may determine to terminate the session which the group member joins based on the evaluation result.

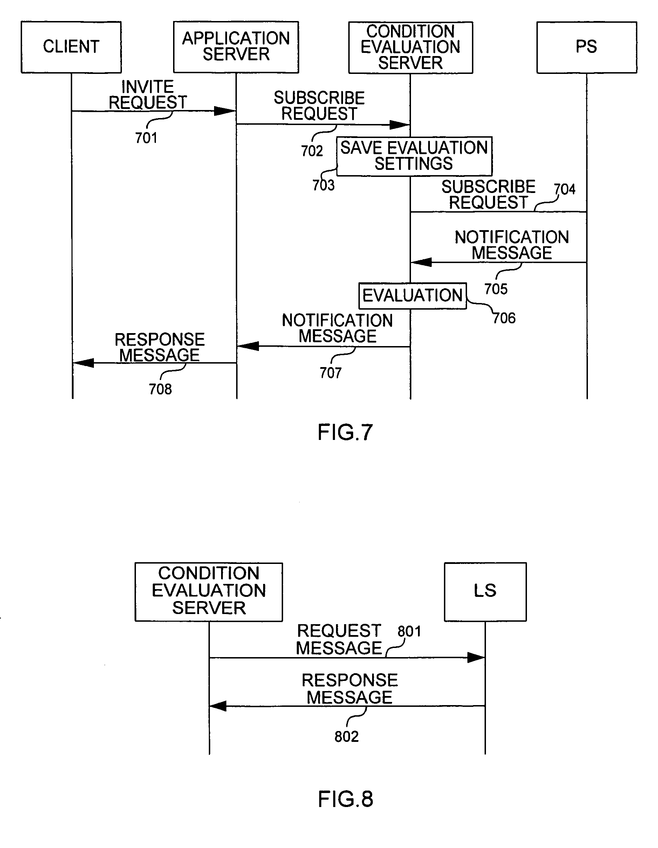

FIG. 7 illustrates a flowchart of a method for acquiring an evaluation result according to a seventh embodiment of the present disclosure. The present embodiment may include the following steps.

Step 701: The client sends an INVITE message to the application server, for requesting to establish a group session. The INVITE message includes a group member list, evaluation conditions, evaluation settings and an evaluation event ID.

The group member list is used to indicate the information of the Ad-hoc group members. The evaluation condition is used to specify the evaluation condition which the members in the dynamic group should meet. The evaluation settings is used to set the method for the condition evaluation server to perform condition evaluation. For instance, one-time evaluation, multiple times of evaluation, real-time evaluation, and information such as evaluation time, evaluation interval. The evaluation service ID is used to indicate that this service is an evaluation service which requires evaluating by the condition evaluation server. The specific message format is essentially similar to the message format as described in the method for acquiring the evaluation result in the fifth and sixth embodiments. The main difference is that the Request-URI in the INVITE message is sip:ConferenceFactoryURI.example.com, and the Ad-hoc group list information is added in the message body, as shown below.

```
    Content-Type: application/resource-lists+xml
    <?xml version="1.0" encoding="UTF-8"?>
    <resource-lists xmlns="urn:ietf:params:xml:ns:resource-lists"
           xmlns:xsi="http://www.w3.org/2001/XMLSchema-instance">
      <list>
       <entry uri="sip:a@example.com" />
       <entry uri="sip:b@example.com" />
       <entry uri="sip:c@example.com" />
      </list>
    </resource-lists>
```

Step 702: The application server sends a subscribe request message to the condition evaluation server based on the evaluation service ID. The request message includes group member information, evaluation condition, and evaluation settings, etc.

Step 703: The condition evaluation server may save the evaluation settings.

The evaluation settings is used to specify the type of condition evaluation, i.e., one-time evaluation, real-time evaluation, multiple times of evaluations, time interval between the evaluations, granularity of the evaluation, etc.

Step 704: The condition evaluation server sends a subscribe request message to the PS for subscribing to the presence information associated with the group member list. The condition evaluation server subscribes the presence information from the corresponding PS for the group member. The subscribe request message includes group member information and the subscribed presence information.

Step 705: The PS sends the notification message to the condition evaluation server. The notification message includes the group member information and the related presence information. The condition evaluation server receives multiple notification messages and collects the information.

Step 706: The condition evaluation server may evaluate the presence information of the group members based on the evaluation settings and evaluation condition so as to determine the group member who matches the evaluation condition and save the result of condition evaluation.

The evaluation condition is met only when the status information <basic> of the group member is "open", and the status information <place-type> is "office". After the real-time evaluation of the condition evaluation server, members a@example.com, b@example.com and c@example.com all meet the evaluation condition.

Step 707: The condition evaluation server sends a notification message to the application server. The notification message includes the information of the group member who matches the evaluation condition, and the information of the results of condition evaluation. The specific format of the notification message is as follows:

```
<?xml version="1.0" encoding="UTF-8"?>
    <condev-result xmlns="urn:ietf:params:xml:ns:condev-result">
    <match-list>
             <entry uri="sip:a@example.com" />
             <entry uri="sip:c@example.com" />
    <entry uri="sip:b@example.com" />
       </match-list>
       <mismatch-list/>
    </condev-info>
```

Step 708: The application server may send an invitation to the group member matching the evaluation condition, whose information is returned by the condition evaluation server, and then establish a group session and return a response message to the client.

The received reason of mismatch of the evaluation condition is presented to the client. The member may modify, based on the reason, some of the options which can be set by the user to satisfy the evaluation condition so as to re-initiate a request to join the session for re-evaluation.

In the present embodiment, the client may first interact with the application server and initiate an Ad-hoc group based session request. In the request message, the evaluation condition which the session participant needs to meet is specified and the method for executing evaluation condition is specified. The application server sends the evaluation object and the evaluation condition together with the evaluation settings to the condition evaluation server. The condition evaluation server determines the user who matches the condition based on the evaluation condition of the client by performing condition evaluation. The condition evaluation server may feed back the group member information and the result of condition evaluation to the application server. The application server may then initiate an invitation for joining the session to the group members who match the condition and establish a group session.

In the embodiment, according to the process of the client acquiring the group member who matches the evaluation condition from the condition evaluation server, since the client specifies an Ad-hoc group member information in the request message, the condition evaluation server may directly extract group member information from the request. Then, the application server may send a request to the condition evaluation server. The condition evaluation server may directly acquire associated information from the PS based on the information of the member in the group member list and evaluate the Ad-hoc group member based on the evaluation settings and the evaluation condition and feedback the result to the application server which may then initiate a session.

Further, after step 708, the present embodiment may further include a process of rejecting the group member who does not match the evaluation condition from the session. This process is identical with the process in the sixth embodiment, which is omitted herein for brevity.

FIG. 8 illustrates a flowchart of a method for acquiring an evaluation result according to an eighth embodiment of the present disclosure. Compared with the method for acquiring evaluation result according to previous embodiments, according to the present embodiment, the presence information associated with the group member acquired by the condition evaluation server may include location related information from the Location Server (LS). Then, the process for the condition evaluation server acquiring location related information of the group member from LS may include the following steps.

Step 801: The condition evaluation server sends a request message to LS.

The location information of the group member can be acquired through a Mobile Location Protocol (MLP) between the condition evaluation server and the LS. The MLP may be carried by way of protocols, such as TCP/IP, HTTP or SIP. As an example, a POST message based on HTTP is illustrated. The MLP is used in the message to acquire the location information of the group member. In the request, the location information of one or more group member can be acquired at one time. Below is an example where the location information of the group member a@example.com is acquired. The message format is as follows.

```
    POST http://location-server.example.com:9210/LocationQueryService
    /HTTP/1.1
    Host: condev.example.com
    User-Agent: condev /OMA2.0
    Date: Thu, 10 Aug 2006 10:50:33 GMT
    X-3GPP-Intended-Identity: "sip:user@example.com"
    Content-type: application/slir-info + xml
    Length: ...
    <?xml version='1.0' encoding='UTF-8'?>
      <slir-info xmlns ="urn:oma:xml:ls:slir-info">
    <slir ver='3.0.0' res_type='SYNC'>
    <msids>
    <msid type='MSISDN'>3035551003</msid>
    </msids>
    <loc_type type='CURRENT_OR_LAST'/>
    </slir>
    </slir-info>
```

In the POST request message, Content-type: application/slir-info + xml indicates that the content in the message body is a Standard Location Immediate Request. The msid of user a@,example.com is 3035551003 and the location type is CURRENT_OR_LAST.

In the message body, "filter" may also be defined to indicate the content of the location information requested.

Step 802: After the LS receives the request message, the LS may acquire the location information associated with the group member based on the content in the MLP in the message, and inform the condition evaluation server by means of a response message. The message format is as follows.

```
    HTTP/1.1 200 OK
    Server: LS-serv/OMA2.0
    Date: Thu, 10 Aug 2006 10:50:39 GMT
     Content-Type: application/slia-info+xml
     Content-Length:
     <?xml version='1.0' encoding='UTF-8'?>
     <slia-info xmlns ="urn:oma:xml:ls:slia-info">
     <slia ver='3.0.0'>
     <pos>
     <msid>3035551003</msid>
     <pd>
     <time utc_off='+0100'>
    20080101091301
    </time>
    <shape>
    <CircularArea>
    <coord>
    <X>45 07 24.123N</X>
    <Y> 100 06 22.111 E</Y>
    <Z>5280</Z>
    </coord>
    <radius> 1000</radius>
    </CircularArea>
    </shape>
    <alt>5280.0</alt>
    </pos>
    </slia>
    </slia-info>
```

In the above response message, Content-type: application/slia-info+xml indicates that the content in the message body is a Standard Location Immediate Answer, where the content is the related location information of the group member a@example.com.

When the location information of the group member in the LS changes, the LS may send a message carrying MLP information, which informs the condition evaluation server of the change. The condition evaluation server may perform real-time evaluation on the group member.

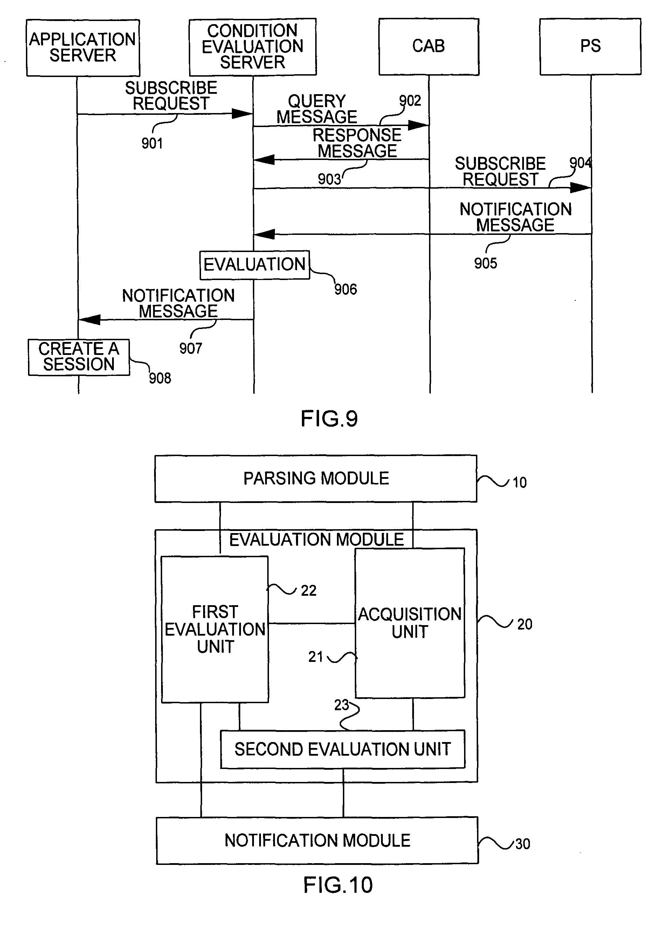

FIG. 9 illustrates a flowchart of a method for acquiring an evaluation result according to a ninth embodiment of the present disclosure. The present embodiment may include the following steps.

Step 901: When the event pre-defined in the application server occurs, the application server sends a subscribe request message. The subscribe request message includes evaluation object, evaluation conditions, and evaluation settings.

The evaluation object is expressed with XQuery approach. The group member information is determined by query. The evaluation condition is used to specify the evaluation condition which the members in the dynamic group should meet. The evaluation settings is used to set the method for the condition evaluation server to perform condition evaluation. For instance, one-time evaluation, multiple times of evaluation, real-time evaluation, and information such as evaluation time, evaluation interval. The specific message format is as follows.

```
    SUBSCRIBE sip:condev.example.com SIP/2.0
    Via: SIP/2.0/TCP host.example.com;branch=z9hG4bKnash54
    To: <sip: condev.example.com>
    From: <sip:server.example.com>;tag=xfg9uiut
    Call-ID: 4654674j82
    CSeq: 6 SUBSCRIBE
    Contact: <sip: server.example.com >
    Max-Forwards: 70
    Event: condev
    Accept: application/condev-result+xml
    Content-type: multipart/mixed; boundary="boundaryl"
    Length: ...
    --boundary1
    Content-Type: application/vnd.oma.search+xml
    <?xml version="1.0" encoding="UTF-8"?>
    <search-set xmlns="urn:oma:xml:xdmaearch">
    <search id="1234">
       <request>
         <query>
      <![CDATA[
           xquery version "1.0";
           declare default element namespace "urn:oma:xml:cab:contact-info";
              for $u in collection("org.openmobilealliance.cab/users/")/user
           where ($u/hobbies/hobby="football")and($u/department="software")
              return <uri>{$u/@uri}</uri>
        ]]>
        </query>
    </request>
    </search>
    </search-set>
    --boundary1
    Content-Type: application/condev-rules+xml
    <?xml version=" 1.0" encoding="UTF-8"?>
    <condev-rules xmlns="urn:ietf:params:xml:ns:condev-rules"
    xmlns:pidf="urn:ietf:params:xml:ns:pidf"
    xmlns:rpid="urn:ietf:params:xml:ns:pidf:rpid"
    xmlns:pp="urn:ietf:params:xml:ns:pidf:person">
    <rule id="a">
        <conditions type="xpath">
         <include>
         /pidf:presence/pidf:tuple[rpid:class="PoC"]/
 pidfatatus[pidf:basic="open"]/pidf:basic
         </include>
         <include>
         /pidf:presence/pidf:person/ppatatus[pp:place-type
 ="office"]/pp:place-type
         </include>
         </conditions>
    <rule>

    < evaluation-setting >
      < evaluation-type > RealTime</ evaluation-type >
    <validity>
      <from>2008-01-20T17:00:00+01:00</from>
      <until>2008-01-20T19:00:00+01:00</until>
    </validity>
    </ evaluation-setting >
    </condev-rules>
    --boundary1--
```

In the above message, the content contained in the Content-type: application/vnd.oma.search+xml indicates that the evaluation object (group member information) is determined based on the condition defined by XQuery. The query condition herein is to query the Converged Address Book (CAB) server for a member whose department is "software" and whose favorite is "football" and this member is regarded as the evaluation object. The URI information of the group member is returned as the result.

The personal information of the evaluation object based on Converged Address may include static information such as URI, name, address, telephone number, and interest. The personal information may further include some dynamic information such as location information, presence information, etc.

The other content is the same as those in the previous embodiment, which is omitted herein for brevity.

The evaluation condition and the evaluation settings may not be involved in this step. The default settings of the condition evaluation server may be used.

Step 902: The condition evaluation server determines the evaluation object (group member information) based on the query condition and sends an XQuery message to the CAB to query for information, and acquires the list information of the group member who matches the query condition. The XQuery message may be carried in the subscribe request message based on SIP or XCAP. A POST method based on XCAP is described below as an example. The specific message format is as follows.

```
    POST /org.openmobilealliance.search?target=org.openmobilealliance.cab/
 users/HTTP/1.1
    Host: condev.example.com
    Date: Thu, 10 Jan 2008 10:50:33 GMT
    X-3GPP-Intended-Identity: "sip:condev.example.com"
    Content-Type: application/vnd.oma.search+xml
    Content-Length:
    <?xml version=" 1.0" encoding="UTF-8"?>
    <search-set xmlns="urn:oma:xml:xdm:search">
    <search id="1234">
      <request>
         <query>
            <![CDATA[
           xquery version "1.0";
           declare default element namespace "urn:oma:xml:cab:contact-info";
              for $u in collection("org.opennobilealliance.cab/users/")/user
           where ($u/hobbies/hobby="football")and($u/department="software")
              return <uri>{$u/@uri}</uri>
        ]]>
         </query>
      </request>
    </search>
    </search-set>
```

Step 903: The CAB returns a response message to the query result, where the response message includes list information of the group member who matches the condition. The following is an example where three users a@example.com, b@example.com, and c@example.com match the query condition. The format of the response message is as follows.

```
    HTTP/1.1 200 OK
    Server: CAB-serv/OMA2.0
    Date: Thu, 10 Aug 2006 10:50:39 GMT
    Content-Type: application/vnd.oma.search+xml
    Content-Length: (...)
    <?xml version=" 1.0" encoding="UTF-8"?>
    <search-set xmlns="um:oma:xml:xdm:search"
                xmlns:cab="urn:oma:xml:xdm:cab">
    <search id="1234">
      <response>
          < cab:user uri="A@example.com"></cab:user>
          <cab:user uri="B@example.com"></cab:user>
          <cab:user uri="C@example.com"></cab:user>
      </response>
```

</search> </search-set>

The returned content includes URI information of the user.

Step 904: After the condition evaluation server determines the evaluation object (group member information), the condition evaluation server sends a subscribe request message to the PS for subscribing to the presence information associated with the group member list. The condition evaluation server subscribes the presence information from the corresponding PS for the group member. The subscribe request message includes group member information and the subscribed presence information.

Step 905: The PS sends a notification message to the condition evaluation server. The condition evaluation server receives multiple notification messages and collects the information.

Step 906: The condition evaluation server may perform condition evaluation on the information of the group members based on the evaluation settings and evaluation condition so as to determine the group member who matches the condition and save the evaluation result.

Step 907: The condition evaluation server sends a notification message to an application server. The message includes group members who match the condition and the result of condition evaluation.

Step 908: The application server invites the group member who matches the condition to join the session.

The received reason of mismatch of the evaluation condition is presented to the client. The member may modify, based on the reason, some of the options which can be set by the user to satisfy the evaluation condition so as to re-initiate a request to join the session for re-evaluation.

According to the present embodiment, a forthcoming event is pre-arranged at an application server. For instance, in a conference system, one may predefine to create a session at a certain time in the future and the group member who joins the session may be appointed. When the event occurs, the application server may actively initiate the session and invite the participant to join the session. When the application server is framing the information of the participant, the evaluation object (pre-arranged group, Ad-hoc group) may be specified and the evaluation condition may be defined. The condition evaluation server may determine the group member who matches the evaluation condition based on the evaluation condition defined by the application server and inform the application server of the information of the group member who matches the condition and the evaluation result. The application server invites the member who matches the condition to join the session.

FIG. 10 illustrates a block diagram of a condition evaluation server according to an embodiment of the present disclosure. The present embodiment includes a parsing module 10, evaluation module 20 and a notification module 30 which are coupled in sequence. The condition evaluation server according to the present disclosure is a logic function module. In real application, it may be deployed at the terminal side, or may be deployed at the network side. The condition evaluation server may be provided alone or in combination with other network entity. The parsing module 10 is configured to parse the received request message, acquire the evaluation object, the evaluation condition and evaluation settings. The evaluation module 20 is configured to evaluate the related information of the evaluation object based on the evaluation settings and the evaluation condition. The notification module 30 is configured to send the notification message carrying the evaluation result. The evaluation result may be one or more of the followings: the information of the group member who matches the evaluation condition, the information of the group member who does not match the evaluation condition, the result of condition evaluation.

The parsing module may directly obtain the group member information from the request message, or obtain the group member information from the XDMS based on the group ID parsed from the request message, or obtain the group member information from the CAB server based on the query condition parsed from the request message.

In addition, the evaluation module 20 according to the present disclosure may include an acquisition unit 21 and a first evaluation unit 22 which are connected to each other. The acquisition unit 21 is configured to acquire the related information of the evaluation object. The first evaluation unit 22 is configured to evaluate the related information of the evaluation object acquired by the acquisition unit 21, based on the evaluation settings and the evaluation condition.

The acquisition unit may acquire the related information of the evaluation object from the presence server, LS or CAB server.

According to the present embodiment, the parsing module parses the received request message, acquires the evaluation object, evaluation condition and evaluation settings. The evaluation module determines the group member who matches the condition by performing condition evaluation. The notification module feeds back the detailed result of the condition evaluation to the client so that the group member may know about the detailed evaluation result (or reason) when the group member is rejected or excluded from the session.

Further, the evaluation module 20 according to the present embodiment may further include a second evaluation unit 23 configured to re-evaluate the related information of the evaluation object acquired by the acquisition unit 21 when it is detected that the evaluation result changes. As such, real-time condition evaluation may be realized during the session.

It is appreciated by those skilled in the art that the entire or partial steps in the above method embodiments can be implemented with hardware when instructed by programs. Such programs may be stored in a computer readable storage media. When the program is being executed, the steps in the above method embodiments are executed. The storage media may include various media which store the program codes such as ROM, RAM, magnetic disc, or optical disc, etc.

It should be noted that the foregoing embodiments are merely illustrations for the technical solutions of the present disclosure, as the disclosure is not so limited. Although the foregoing embodiments are provided for illustration of the present disclosure, it is appreciated by a person of ordinary skill in the art that any modifications may be made to the technical solutions disclosed in the various foregoing embodiments or equivalents may be made to part of the technical solutions therein without essentially departing from the scope of the technical solutions disclosed in the various embodiments of the present disclosure.

## Claims

1. A method for acquiring an evaluation result, **characterized by** comprising:
parsing a received request message, acquiring evaluation object, evaluation condition and evaluation settings;
evaluating related information of the evaluation object based on the evaluation settings and the evaluation condition; and
sending a notification message carrying an evaluation result.

2. The method of claim 1, **characterized in that**, the acquiring the evaluation object comprises:
parsing the request message directly to obtain group member information; or
acquiring group member information from an XML, Extensible Markup Language, document management server based on a group ID parsed from the request message; or
acquiring group member information from a converged address book server based on a query condition parsed from the request message.

3. The method of claim 1, **characterized in that**, acquiring the evaluation condition comprises:
parsing the request message directly to obtain the evaluation condition; or
acquiring the evaluation condition from an XML document management server based on a group ID parsed from the request message; or
acquiring the evaluation condition from a storage location corresponding to a reference path, based on the reference path of the evaluation condition storage location parsed from the request message.

4. The method of claim 3, **characterized in that**, the evaluation settings comprises evaluation type, evaluation duration, maximum and/or minimum number of group members returned after evaluation, time interval between the evaluations, or evaluation granularity.

5. The method of claim 4, **characterized in that**, the evaluation type comprises:
performing real-time monitoring on the related information of the evaluation object and determining whether the related information matches the evaluation condition; or periodically acquiring the related information of the evaluation object and determining whether the related information matches the evaluation condition; or
monitoring the related information of the evaluation object at a predetermined time and determining whether the related information matches the evaluation condition; or
terminating the evaluation when the evaluation condition is matched or a predetermined monitoring time is reached.

6. The method of claim 1 or 2, **characterized by** further comprising acquiring the related information of the evaluation object, where acquiring the related information of the evaluation object comprises acquiring the related information of the evaluation object from a presence server, a location server or a converged address book server, wherein the related information of the evaluation object comprises one or more of the following information: presence information of the evaluation object, location information of the evaluation object and personal information of the evaluation object.

7. The method of claim 1 or 2, **characterized in that**, the evaluation condition comprises location condition and/or presence condition.

8. The method of claim 1 or 2, **characterized in that**, the evaluation result is one or more of the following information: information of the group member who matches the evaluation condition, information of the group member who does not match the evaluation condition and information of the result of the condition evaluation.

9. The method of claim 8, **characterized in that**, the information of the group member in the evaluation result is a Uniform Resource Identifier of the group member.

10. The method of claim 8, **characterized in that**, the information of the result of the condition evaluation comprises:
information of the group member who newly matches the evaluation condition; and/or
information of the group member who no longer matches the evaluation condition as a result of the current evaluation.

11. The method of claim 8, **characterized in that**, after sending the notification message carrying the evaluation result, the method further comprises:
presenting the received evaluation result at a client of the group member who does not match the evaluation condition;
modifying, by the client, related settings in accordance with an instruction from the group member so as to match the evaluation condition; and
re-initiating, by the client, a request message to join the session.

12. The method of claim 2, **characterized by** further comprising:
detecting a change of the related information of the evaluation object;
evaluating the changed related information of the evaluation object based on the evaluation settings and the evaluation condition;
sending the notification message carrying change information of the related information of the evaluation object, wherein the change information of the related information of the evaluation object comprises one or more of the following information: information of the group member who matches the evaluation condition, information of the group member who does not match the evaluation condition, and information of the result of the condition evaluation.

13. The method of claim 2, **characterized by** further comprising:
detecting a change of the related information of the evaluation object;
sending a notification message carrying the evaluation condition;
evaluating the changed related information of the evaluation object based on the evaluation condition and acquiring the evaluation result;
sending the evaluation result, wherein the evaluation result is one or more of the following information: information of the group member who matches the evaluation condition, information of the group member who does not match the evaluation condition, information of the result of the condition evaluation.

14. A condition evaluation server, **characterized by** comprising:
a parsing module, configured to parse a received request message and acquire evaluation object, evaluation condition and evaluation settings;
an evaluation module, configured to evaluate related information of the evaluation object based on the evaluation settings and the evaluation condition; and
a notification module, configured to send a notification message carrying an evaluation result.

15. The server of claim 14, **characterized in that**, the evaluation module comprises:
an acquisition unit, configured to acquire the related information of the evaluation object;
a first evaluation unit, configured to evaluate related information of the evaluation object acquired by the acquisition unit based on the evaluation settings and the evaluation condition.
